# EUROPÄISCHE PATENTSCHRIFT

(11) **EP 2 464 893 B1**
(45) Veröffentlichungstag und Bekanntmachung des Hinweises auf die Patenterteilung: **01.05.2013**
(21) Anmeldenummer: 10737016.5
(22) Anmeldetag: 15.07.2010
(51) Int. Cl.: F16H 7/12

(54) **DICHTUNG MIT SELBSTVERSTÄRKENDER DICHTLIPPE FÜR EIN SPANNSYSTEM**
SEAL WITH A SELF-REINFORCING SEALING LIP FOR A TENSIONING SYSTEM
JOINT AVEC UNE LÈVRE D'ÉTANCHÉITÉ À AUTO-RENFORCEMENT POUR UN SYSTÈME DE TENSION

(30) Priorität: 13.08.2009 DE 102009037498
(43) Veröffentlichungstag der Anmeldung: 20.06.2012
(73) Patentinhaber: Schaeffler Technologies AG & Co. KG, 91074 Herzogenaurach (DE)
(72) Erfinder: PFLUG, Rainer, 91560 Heilsbronn (DE); SCHMIDT, Werner, 91074 Herzogenaurach (DE); BAUER, Hans, 91452 Wilhermsdorf (DE); GRABOSCH, Thomas, 91341 Röttenbach (DE); WICHER, Sven, 91448 Emskirchen (DE)
(86) Internationale Anmeldenummer: PCT/EP2010/060221
(87) Internationale Veröffentlichungsnummer: WO 2011/018297

(56) Entgegenhaltungen:
- DE-A1-102005 002 253
- DE-A1-102007 031 294
- US-A- 4 696 663
- US-A- 5 354 242

## Beschreibung

### Gebiet der Erfindung

Die Erfindung betrifft ein für Zugmitteltriebe bestimmtes Spannsystem, bestehend aus einem ortsfest positionierten Gehäuse und einem drehbaren Schwenkarm, dem endseitig eine drehbar angeordnete Spannrolle zugeordnet ist. Im Einbauzustand des Spannsystems ist die Spannrolle kraftschlüssig an einem Zugmittel des Zugmitteltriebs abgestützt. Über ein Drehlager ist der Schwenkarm in einem von dem Schwenkarm und dem Gehäuse gebildeten rotationssymmetrischen Einbauraum gelagert. Dazu umschließt eine mit dem Gehäuse oder dem Schwenkarm verbundene Nabe einen Lagerzapfen des zugehörigen weiteren Bauteils. In dem Einbauraum sind weiterhin eine den Schwenkarm kraftbeaufschlagende Torsionsfeder sowie eine Dämpfungseinrichtung zur Dämpfung von Stellbewegungen des Schwenkarms integriert. Außenseitig stellt sich zwischen dem Schwenkarm und dem Gehäuse eine mit dem Einbauraum verbundene Trennfuge ein. Zur Abdichtung eines radialen Bereichs der Trennfuge ist ein dem Gehäuse oder dem Schwenkarm zugeordnetes Dichtelement vorgesehen, das mit einer elastischen, V-förmig in Richtung eines Trennfugeeintritts gespreizten Dichtlippe an dem radial beabstandeten, zugehörigen weiteren, die Trennfuge begrenzenden Bauteil dichtend abgestützt ist.

### Hintergrund der Erfindung

Aus der WO 01 / 46603 A1 ist beispielsweise ein Spannsystem der vorgenannten Gattung bekannt. Der Aufbau dieses Spannsystems umfasst ein ortsfestes Gehäuse mit einer zentrischen Längsbohrung, in die in ein drehbarer Lagerzapfen des Schwenkhebels eingreift, zur Bildung eines Drehlagers bzw. einer Welle-Nabeverbindung. Das topfartig gestaltete Gehäuse mit integrierter Torsionsfeder und Dämpfungseinrichtung greift in eine Aufnahme des Schwenkhebels, wobei ein äußerer Bord des Schwenkhebels unter Einhaltung eines Ringspaltes die äußere Gehäusekontur bereichsweise umschließt.

Ein weiteres gattungsgemäßes Schwenkhebel-Spannsystem zeigt die Offenlegungsschrift DE 10 2007 015 676 A1. Dieses Spannsystem schließt zur Bildung eines Drehlagers ein topfartig gestaltetes Gehäuse mit einem axial vorstehenden Lagerzapfen ein, auf dem der Schwenkhebel mittels einer Nabe drehbar positioniert ist. Eine Außenwandung des Gehäuses ist unter Einhaltung eines axialen Ringspaltes bis an die seitliche Kontur des Schwenkhebels geführt.

Ein Spannsystem der eingangs genannten Art ist aus der gattungsgemäßen US 5 354 242 A bekannt.

### Zusammenfassung der Erfindung

Der vorliegenden Erfindung liegt die Aufgabe zu Grunde, eine zuverlässige und wirksame Abdichtung des Innenraums von einem Schwenkhebel-Spannungssystem gegenüber Medienangriffe zu realisieren.

Diese Problemstellung wird erfindungsgemäß durch die Merkmale des Anspruchs 1 gelöst. Danach ist das Dichtelement in der Aufnahme des Schwenkarms positioniert, und die elastische Dichtlippe ist an dem radial beabstandeten Ansatz des Gehäuses abgestützt.

Dieses Dichtungskonzept besitzt im Normalbetrieb eine vorteilhaft geringe Dichtungsreibung aufgrund der mit einem geringen Anpressdruck abgestützten Dichtlippe.

Vorteilhaft wird durch das erfindungsgemäße Dichtelement die Dämpfungsfunktion des Spannsystems nicht beeinflusst. Weiterhin stellt sich auch im Vergleich zu einer O-Ringabdichtung keine nachteilige Reibungsstreuung der Dichtungsreibung ein.

Gegenüber O-Ringen, deren Einbaulage aufgrund unzureichender Montageverhältnisse zu einer Spaltextrusion führen kann, ermöglicht das erfindungsgemäße Dichtelement aufgrund der elastischen Dichtlippe einen vorteilhaften Ausgleich von Fertigungs- und / oder Lagetoleranzen. Die Dichtlippenanordnung ermöglicht einen Ausgleich auch zwischen den Anschlussteilen, dem Gehäuse und dem Schwenkarm in axialer Richtung von ± 1 mm und in radialer Richtung von ± 0,5 mm.

Weiterhin vereinfacht der Aufbau und die Anordnung des erfindungsgemäßen Dichtelementes die Montage, ermöglicht eine kostenoptimierte automatisierte Montage in einer Montagelinie und vermeidet ein Montagerisiko durch eine Fehlmontage.

Das erfindungsgemäße Dichtelement weist im Normalbetrieb eine elastische Dichtlippe auf, die mit einem geringen Anpressdruck und damit geringster Reibung dichtend abgestützt ist. Das erfindungsgemäße Dichtelement bzw. die Dichtung einschließlich der Dichtlippe wird vorgespannt, beziehungsweise gedehnt montiert, um eine Bewegung der Dichtung bzw. der Dichtlippe bei der Montage oder unter Belastung zu vermeiden. Aufgrund eines Linienkontakts der Dichtlippe mit der zugehörigen Kontaktfläche wird außerdem ein Stick-Slip-Effekt und eine damit verbundene Geräuschbildung vorteilhaft unterbunden.

Aufgrund der V-förmig in Richtung des Medieneintritts in die Trennfuge ausgerichteten, gespreizten Einbaulage der Dichtlippe stellt sich eine verbesserte Dichtwirkung ein. Beispielsweise übt Spritzwasser bei hohen Fahrzeuggeschwindigkeiten oder eine Hochdruckreinigung einen höheren Anpressdruck der Dichtlippe aus, der die Wirkung der Abdichtung und folglich des Dichtelementes verbessert.

Ein weiterer Vorteil der Erfindung ist dadurch gegeben, dass zu einem späteren Projektstand das Spannsystem mit dem erfindungsgemäßen Dichtelement nachgerüstet werden kann.

Die Erfindung schließt ein Dichtelement ein, dessen elastische Dichtlippe an dem radial beabstandeten Ansatz des Gehäuses abgestützt ist, wobei das Dichtelement in der Aufnahme des Schwenkarms positioniert ist.

Es bietet sich an, die Trennfuge als ein Dichtungslabyrinth mit einem axial und radial verlaufenden Trennfugenbereich auszubilden. Diese eine Vordichtung bildende Maßnahme bewirkt einen verbesserten Schutz der elastischen Dichtlippe, insbesondere gegenüber Verunreinigungen, wie grobe Schmutzpartikel, was sich vorteilhaft auf die Lebensdauer des Dichtelementes auswirkt.

Zur Erzielung eines verlängerten Dichtungslabyrinths kann beispielsweise ein axial vorspringender zylindrischer Ansatz von dem Schwenkarm spielbehaftet in eine stirnseitige Ringnut des Gehäuses eingreifen. Alternativ dazu bietet es sich an, das Gehäuse mit einem zylindrischen Ansatz zu versehen, der spielbehaftet in eine zugehörige Nut des Schwenkarms eingepasst ist.

Ergänzend oder alternativ zu einem Dichtungslabyrinth umfasst die Erfindung außerdem eine dem Dichtungselement vorangestellte zusätzliche separate Dichtung, um beispielsweise ein watfähiges Spannsystem darzustellen. Dazu eignet sich beispielsweise ein mit Fett getränkter Filzring oder eine alternative reibungsarme Abdichtung, die dem Gehäuse oder dem Schenkarm zugeordnet, mit geringster Anpresskraft dem zugehörigen weiteren Bauteil zugeordnet ist.

Eine weitere Ausgestaltung der Erfindung betrifft den Dichtungsrücken des Dichtelementes, der zur gezielten Versteifung eine Armierung umfasst. Dazu bietet es sich an, im Herstellungsprozess die Armierung von dem Werkstoff, dem Kunststoff des Dichtelementes zu umspritzen.

Zur Vermeidung einer Kontaktkorrosion ist vorgesehen, dass die elastische Dichtlippe des Dichtelementes an einer beschichteten Kontaktfläche abgestützt ist. Bevorzugt eignet sich dazu eine Beschichtung, die neben einem wirksamen Korrosionsschutz gleichzeitig eine reibungsmindernde Beschichtung bildet. Dazu eignet sich beispielsweise eine Zn/Ni-Beschichtung, die anschließend mit Molybdän beschichtet werden kann. Als Werkstoff für den einteiligen Aufbau des Dichtelementes ist vorzugsweise ein Elastomer vorgesehen.

### Kurze Beschreibung der Zeichnung

Die Erfindung wird im Folgenden anhand der beiliegenden Zeichnung an einem bevorzugten Ausführungsbeispiel näher erläutert. Darin zeigt:
- Fig. 1: einen Spannsystem-Ausschnitt mit einem integrierten erfindungsgemäßen Dichtelement;
- Fig. 2: in einem vergrößerten Maßstab ein Detail "Z" aus Figur 1.

### Detaillierte Beschreibung der Zeichnung

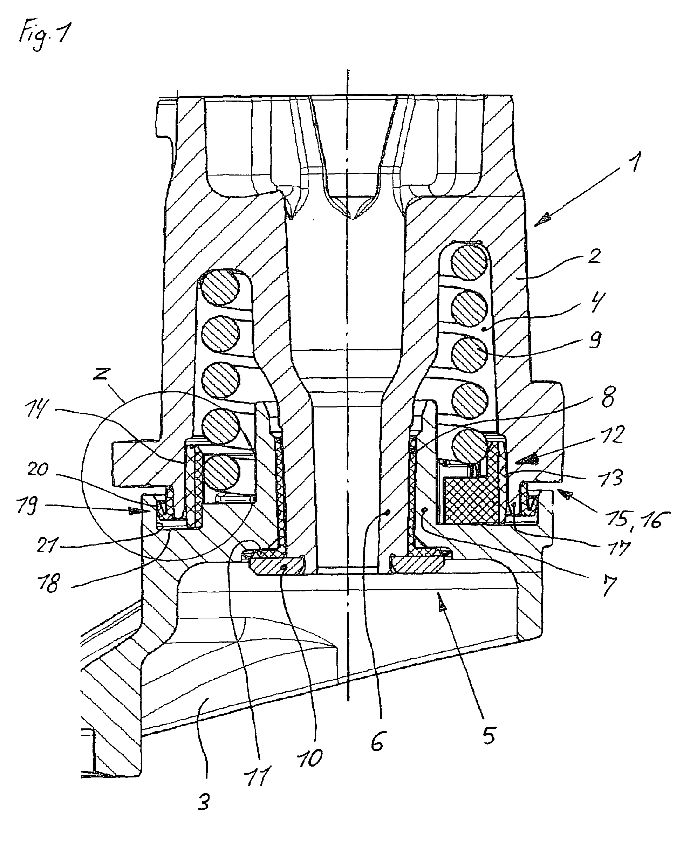

Die Figur 1 zeigt in einer Schnittdarstellung einen Ausschnitt eines Spannsystems 1, das als Schwenkhebel-Spannsystem ausgeführte Spannsystem 1 umfasst ein ortsfest positioniertes Gehäuse 2 sowie einen Schwenkarm 3. In einem topfartig gestalteten Einbauraum 4 des Gehäuses 2 ist ein Drehlager 5 integriert, über das der Schwenkarm 3 beweglich angeordnet ist. Das Drehlager 5 umfasst einen zylindrischen, dem Gehäuse 2 zugeordneten, axial vorstehenden Lagerzapfen 6, auf dem über eine Nabe 7 in Verbindung mit einem Gleitlager 8 der Schwenkarm 3 drehbar angeordnet ist. Der Einbauraum 4 dient weiterhin zur Aufnahme einer Torsionsfeder 9, deren Federenden an dem Gehäuse 2 beziehungsweise dem Schwenkarm 3 fixiert sind. Die Torsionsfeder 9 bewirkt im Betriebszustand des Spannsystems 1, dass eine endseitig an dem Schwenkarm 3 positionierte, in Figur 1 nicht abgebildete Spannrolle kraftschlüssig an einem Zugmittel des Zugmitteltriebs abgestützt ist. Zur Abstützung einer von der Torsionsfeder 9 ausgelösten Axialkraft auf den Schwenkarm 3 ist dieser mit der Nabe 7 mittelbar an einem endseitig des Lagerzapfens 6 befestigten Halteelement 10 geführt, wobei als Axiallager ein Bord 11 des Gleitlagers 8 zwischen der Nabe 7 und dem Halteelement 10 angeordnet ist. Zur Dämpfung von Stellbewegungen des Schwenkarms 3 schließt das Spannsystem 1 eine Dämpfungseinrichtung 12 ein. Dazu ist ein Federende der Torsionsfeder 9 unmittelbar an der Dämpfungseinrichtung 12 abgestützt, die einerseits an dem Schwenkarm 3 drehfixiert und gleichzeitig über einen Reibring 13 an einer Innenwandung 14 des Gehäuses 2 abgestützt ist.

Zwischen den relativ eng zusammengefügten Bauteilen, dem Gehäuse 2 und dem Schwenkarm 3 ist außenseitig im Bereich einer Mantelkontur eine Trennfuge 15 vorgesehen. Als Maßnahme um einen nachteiligen Medieneintritt bzw. Verunreinigungen jeglicher Art in den Einbauraum 4 zu verhindern, bildet die Trennfuge 15 ein Dichtungslabyrinth 16. Dazu greift ein axial vorstehender, zylindrischer Ansatz 17 spielbehaftet in eine stirnseitige Aufnahme 18 des Schwenkarms 3. Der Ansatz 17 dient zusätzlich zur Aufnahme eines Dichtelementes 19, dessen elastische Dichtlippe 20 an einer Innenkontur 21 des Schwenkarms 3 abgestützt ist.

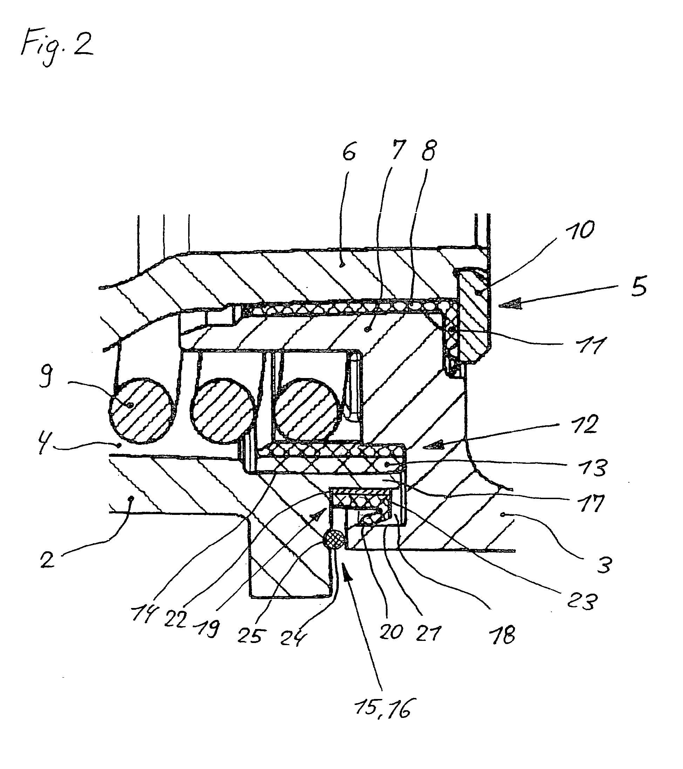

Die Figur 2 zeigt in einem größeren Maßstab das Detail "Z" aus der Figur 1 und verdeutlicht weitere Einzelheiten, insbesondere von dem Dichtelement 19. Über einen eine Armierung 22 einschließenden Dichtungsrücken 23 ist das Dichtelement 19 auf dem Ansatz 17 des Gehäuses 2 lagefixiert. Das Dichtelement 19 gemeinsam mit der elastischen Dichtlippe 20 bilden eine V-förmige Abdichtung, wobei die Dichtlippe 20 in Richtung eines Trennfugeneintritts gespreizt angeordnet ist. Dadurch kommt es bei einem Medieneintritt über die Trennfuge 15 zu einem erhöhten Anpressdruck der Dichtlippe 20 an der Innenkontur 21 des Schwenkarms 3, was sich vorteilhaft auf die Dichtwirkung des Dichtelementes 19 auswirkt. Für den Abstützbereich der elastischen Dichtlippe 20 bietet es sich an, die Innenkontur 21 zu beschichten. Dazu bietet es sich ein Korrosionsschutz und oder eine Beschichtung der Innenkontur 21 an, die eine reduzierte Dichtlippenreibung bewirkt. Die Trennfuge 15 umfasst weiterhin eine dem Dichtelement 19 vorangestellte zusätzliche Abdichtung 24. Vorzugsweise ist zur Darstellung einer reibungsarmen Abdichtung 24 ein mit Fett getränkter Filzring vorgesehen, der in eine Ringnut 25 des Gehäuses 2 eingesetzt ist und mit einer Stirnseite von dem Ansatz 17 des Schwenkarms 3 zusammenwirkt.

### Bezugszahlenliste

| | |
|---|---|
| 1 | Spannsystem |
| 2 | Gehäuse |
| 3 | Schwenkarm |
| 4 | Einbauraum |
| 5 | Drehlager |
| 6 | Lagerzapfen |
| 7 | Nabe |
| 8 | Gleitlager |
| 9 | Torsionsfeder |
| 10 | Halteelement |
| 11 | Bord |
| 12 | Dämpfungseinrichtung |
| 13 | Reibring |
| 14 | Innenwandung |
| 15 | Trennfuge |
| 16 | Dichtungslabyrinth |
| 17 | Ansatz |
| 18 | Aufnahme |
| 19 | Dichtelement |
| 20 | Dichtlippe |
| 21 | Innenkontur |
| 22 | Armierung |
| 23 | Dichtungsrücken |
| 24 | Abdichtung |
| 25 | Ringnut |

## Patentansprüche

1. Spannsystem eines Zugmitteltriebs, umfassend ein ortsfest positioniertes Gehäuse (2) und einen Schwenkarm (3), dem eine mit einem Zugmittel in Verbindung stehende Spannrolle zugeordnet ist, wobei in einem von dem Schwenkarm (3) und dem Gehäuse (2) gebildeten rotationssymmetrischen Einbauraum (4), zur Bildung eines Drehlagers (5), eine mit dem Gehäuse (2) oder dem Schwenkarm (3) verbundene Nabe (7) einen Lagerzapfen (6) des zugehörigen weiteren Bauteils umschließt und in dem Einbauraum (4) weiterhin eine den Schwenkarm (3) kraftbeaufschlagende Torsionsfeder (9) sowie eine Dämpfungseinrichtung (12) integriert sind und wobei sich zwischen dem Schwenkarm (3) und dem Gehäuse (2) eine mit dem Einbauraum (4) verbundene Trennfuge (15) einstellt und zur Abdichtung eines radialen Bereichs der Trennfuge (15) ein dem Gehäuse (2) oder dem Schwenkarm (3) zugeordnetes Dichtelement (19) vorgesehen ist, das mit einer elastischen, V-förmig in Richtung eines Trennfugeeintritts gespreizten Dichtlippe (20) an dem radial beabstandeten, zugehörigen weiteren, die Trennfuge (15) begrenzenden Bauteil dichtend abgestützt ist, **dadurch gekennzeichnet, dass** das Dichtelement (19) in der Aufnahme (18) des Schwenkarms (3) positioniert ist und die elastische Dichtlippe (20) an dem radial beabstandeten Ansatz (17) des Gehäuses (2) abgestützt ist.

2. Spannsystem nach Anspruch 1, **dadurch gekennzeichnet, dass** die Trennfuge (15) ein dem Dichtelement (19) vorangestelltes Dichtungslabyrinth (16) einschließt.

3. Spannsystem nach Anspruch 2, **dadurch gekennzeichnet, dass** zur Bildung des Dichtungslabyrinths (16) ein axial vorspringender zylindrischer Schwenkarmansatz spielbehaftet in eine stirnseitige Ringnut des Gehäuses eingreift.

4. Spannsystem nach einem der Ansprüche 1 bis 3, **dadurch gekennzeichnet, dass** im Bereich der Trennfuge (15) zwischen dem Schwenkarm (3) und dem Gehäuse (2) dem Dichtelement (19) eine reibungsarme Abdichtung (24) vorangestellt ist.

5. Spannsystem nach einem der Ansprüche 1 bis 4, **dadurch gekennzeichnet, dass** der Dichtungsrücken (23) des Dichtelementes (19) eine Armierung (22) aufweist.

6. Spannsystem nach einem der Ansprüche 1 bis 5 **dadurch gekennzeichnet, dass** die elastische Dichtlippe (20) des Dichtelementes (19) an einer beschichteten Kontaktfläche im Bereich der Innenkontur (21) abgestützt ist.

## Claims

1. Tensioning system of a traction mechanism drive, comprising a housing (2) which is positioned in a stationary manner and a pivoting arm (3) which is assigned a tensioning roller which is connected to a traction mechanism, wherein, in a rotationally symmetrical installation space (4) which is formed by the pivoting arm (3) and the housing (2), in order to form a pivot bearing (5), a hub (7) which is connected to the housing (2) or the pivoting arm (3) encloses a bearing journal (6) of the associated further component and, furthermore, a torsion spring (9) which loads the pivoting arm (3) with force and a damping device (12) are integrated in the installation space (4), and wherein a slit (15) which is connected to the installation space (4) is produced between the pivoting arm (3) and the housing (2), and a sealing element (19) which is assigned to the housing (2) or the pivoting arm (3) is provided for sealing a radial region of the slit (15), which sealing element (19) is supported sealingly by way of an elastic sealing lisp (20) which is spread in a V-shaped manner in the direction of a slit entry on the associated further component which is spaced apart radially and delimits the slit (15), **characterized in that** the sealing element (19) is positioned in the receptacle (18) of the pivoting arm (3) and the elastic sealing lip (20) is supported on the projection (17) of the housing (2), which projection (17) is spaced apart radically.

2. Tensioning system according to Claim 1, **characterized in that** the slit (15) encloses a seal labyrinth (16) which is positioned in front of the sealing element (19).

3. Tensioning system according to Claim 2, **characterized in that**, in order to form the seal labyrinth (16), an axially protruding cylindrical pivoting-arm projection engages with play into an end-side annular groove of the housing.

4. Tensioning system according to one of Claims 1 to 3, **characterized in that** a low-friction seal (24) is positioned in front of the sealing element (19) in the region of the slit (15) between the pivoting arm (3) and the housing (2).

5. Tensioning system according to one of Claims 1 to 4, **characterized in that** the seal back (23) of the sealing element (19) has a reinforcement (22).

6. Tensioning system according to one of Claims 1 to 5, **characterized in that** the elastic sealing lip (20) of the sealing element (19) is supported on a coated contact face in the region of the inner contour (21).

## Revendications

1. Système de tension d'un entraînement à moyen de traction, comportant un boîtier (2) positionné de manière fixe et un bras pivotant (3) auquel est associé un rouleau tendeur en liaison avec un moyen de traction, un moyeu (7) relié au boîtier (2) ou au bras pivotant (3) entourant, dans un espace d'installation (4) à symétrie de révolution formé par le bras pivotant (3) et le boîtier (2), un tourillon de palier (6) de l'élément structural supplémentaire associé, en vue de la formation d'un pallier de rotation (5), et un ressort de torsion (9) sollicitant le bras pivotant (3) avec une force ainsi qu'un dispositif d'amortissement (12) étant en outre intégrés dans l'espace d'installation (4), et un joint de séparation (15) relié à l'espace d'installation (4) étant formé entre le bras pivotant (3) et le boîtier (2) et un élément d'étanchéité (19) associé au boîtier (2) ou au bras pivotant (3) étant prévu pour réaliser l'étanchéité d'une région radiale du joint de séparation (15), lequel élément d'étanchéité s'appuie de manière étanche, par une lèvre d'étanchéité (20) élastique écartée en forme de V dans la direction d'une entrée de joint de séparation, contre l'élément structural supplémentaire associé, espacé radialement, limitant le joint de séparation (15), **caractérisé en ce que** l'élément d'étanchéité (19) est positionné dans le logement (18) du bras pivotant (3) et la lèvre d'étanchéité élastique (20) s'appuie contre la saillie (17) espacée radialement du boîtier (2).

2. Système de tension selon la revendication 1, **caractérisé en ce que** le joint de séparation (15) contient un joint d'étanchéité à labyrinthe (16) placé devant l'élément d'étanchéité (19).

3. Système de tension selon la revendication 2, **caractérisé en ce qu**'une saillie cylindrique de bras pivotant, faisant saillie axialement et présentant un jeu, vient en prisse dans une rainure annulaire frontale du boîtier pour former le joint d'étanchéité à labyrinthe (16).

4. Système de tension selon l'une quelconque des revendications 1 à 3, **caractérisé en ce qu**'un joint d'étanchéité à faible friction (24) est placé devant l'élément d'étanchéité (19) dans la région du joint de séparation (15) entre le bras pivotant (3) et le boîtier (2).

5. Système de tension selon l'une quelconque des revendications 1 à 4, **caractérisé en ce que** la face dorsale d'étanchéité (23) de l'élément d'étanchéité (19) comprend un renforcement (22).

6. Système de tension selon l'une quelconque des revendications 1 à 5, **caractérisé en ce que** la lèvre d'étanchéité élastique (20) de l'élément d'étanchéité (19) s'appuie contre une surface de contact revêtue, dans la région du contour intérieur (21).
